# EUROPEAN PATENT APPLICATION

(11) **EP 4 564 870 A1**
(43) Date of publication of application: **04.06.2025**
(21) Application number: 23212683.9
(22) Date of filing: 28.11.2023
(51) Int. Cl.: H04W 8/26

(54) **TECHNIQUES TO ENABLE EFFICIENT COMMUNICATION IN ROAMING USE CASES**

(71) Applicant: Deutsche Telekom AG, 53113 Bonn (DE)
(72) Inventor: BIEWALD, Manuel, Neustadt am Kulm (DE); ZESCHKO, Julian, Nürnberg (DE)
(74) Representative: Braun-Dullaeus Pannen Emmerling Patent- & Rechtsanwaltspartnerschaft mbB

(57) **Abstract**

Techniques for routing a communication in a roaming scenario in a communication system to the responsible core for which the communication is subscribed, wherein the communication system comprises a first core of a home network, a second core of the home network and a third core of a visited network, wherein the subscription was issued by an operator of the first core, but the subscription is assigned to the second core, the method comprising the following steps:
• Sending a message within the visited network, wherein the message is assigned to a service of the second core, wherein the message has a first destination information pointing to the second core of the home network, wherein the first destination information comprises an identifier of the subscription, in particular a SUPI, and/or a routing indicator RI;
• Receiving the message by a vSEPP of the visited network, whereby routing information for the first target information is stored in the vSEPP, in particular in the form of a table, whereby the vSEPP routes the message to a mSEPP of the second core based on the identifier of the subscription and/or the routing indicator RI.

## Description

The invention relates to a method, a communication system and data protocols to enable efficient communication in roaming use cases.

Communication network infrastructure can be run by a mobile network operator (MNO) whereas infrastructure parts of this communication network infrastructure can be lent to mobile network providers - that can also be called MVNO. A Mobile Virtual Network Operator (MVNO) is a wireless service provider that does not own or operate its own network infrastructure or the MVNO can operate its own infrastructure, but does not have its own access network or its own network identifier (TADIG code, MCCMNC). MVNOs can lease network capacity from a Mobile Network Operator (MNO) and resell it to consumers under their own brand. This allows MVNOs to offer a wider range of services and pricing plans than MNOs, and to target specific customer segments. A MVNO can run its own core within or separate to the communication network infrastructure of the MNO. In addition, the MVNO can run its own SEPP. A Security Edge Protection Proxy (SEPP) is a network function that is deployed at the edge of a 5G network to protect against signaling attacks and ensure secure communication between different PMNs (Public Mobile Networks) - For some time now, the term PMN has no longer been in common use and is no longer used in standards since 4G. The term PMN is now often used, as there are now also networks that do not belong to any territorial area. It is a critical component of the 5G Core Network (NGC) and plays a vital role in ensuring the security and integrity of 5G roaming services. The SEPP acts as a proxy between the home network and the visited network, providing a layer of security between them. It performs a number of functions, including: i) Filtering and authorization checks on SBA traffic entering and leaving the network, ii) Encryption and decryption of signaling messages. iii) Protection against denial-of-service (DoS) attacks. iv) Providing access control for roaming traffic.

In the following, we explain some terms used within this description. As this description describes roaming use cases we typically have the three following key players:
1. the visited network: The visited network provides the RAN of a current location of a user. But the IMSIs or SIM Cards of the UE of the user does not belong to the visited network. All 3GPP infrastructure parts that are related to the visited network are characterized by using the prefix "v". For example, the SEPP becomes the vSEPP;
2. the home network: The home network operator is also named MNO. The IMSIs or SIM Cards of the UE of the user does belong to the home network. All 3GPP infrastructure parts that are related to the home network are characterized by using the prefix "h". For example, the SEPP becomes the hSEPP;
3. the MVNO: The MVNO leases IMSIs or SIM Cards of MNO and other with communication infrastructure parts of the MNO. All 3GPP infrastructure parts that are related to the MVNO are characterized by using the prefix "m". For example, the SEPP becomes the mSEPP;

Hence, IMSIs, SUPIs or SIM Cards of the MNO can also be leased to the MVNO. As a consequence, those IMSIs, SUPIs or SIM Cards which are still associated to the MNO are operated within the core of the MNO, whereas the IMSIs, SUPIs or SIM Cards leased or associated to the MVNO are operated within the core of the MVNO. If in the following, the invention is only explained within the context of only one of the terms IMSIs, SUPIs or SIM Cards this is only done make the reading of the description clearer because basically the SUPI also contains the IMSI and the SUPI is part of the SIM Card.

In 5G and possible also in 6G, it is intended that end-to-end communication is secured and furthermore, during the initial registration the IMSI is concealed in the SUCI and only MCC and MNC are known.

So how to distinguish at the initial network registration in a vPMN, which 5G core should be used? SEPP discovery is based on DNS queries with a well-known FQDN "5gc.mnc<MNC>.mcc<MCC>.3gppnetwork.org" where <MNC> and <MCC> are taken from the SUCI. This will initially always lead to the SEPP of the home network operator; and even the hSEPP is not able to redirect the communication to the mSEPP due to missing information.

This leads to the following problem: if a communication is started within the visited network, how can the visited network, in particular a vPMN (private mobile network), know to which SEPP it shall route the communication. If the SUPI is leased by the MVNO then the mSEPP would be the right choice. However, currently the first communication is routed to the hSEPP, whereas the home network than evaluates that SUPI in question is actually associated to the MVNO and provides respective routing information to the vSEPP. However, this internal evaluation and signaling consumes network resources and leads to an enhanced latency regarding the communication.

Hence, it is the task of the invention to provide techniques to enable efficient communication in roaming use cases. In particular, it is the task of the invention to route the communication faster as it is currently done to the network core that is associated to the SUPI.

This task is solved by the independent claims.

The following standardization documents are hereby fully incorporated into the disclosure: 1) GSMA NG.113 (5GS Roaming Guidelines); 2) TS 23.003, in particular paragraphs 2.2, 2.2A und 2.2B; 3) TS 23.501, in particular paragraphs 5.9.2 und 5.9.2a; 4) TS 29.573; 5) TS 23.501 as valid on 2023-09-19; and 6) 3GPP version 18.4.0, dated 2023-09-19.

It is also possible to apply the invention to proceeding and later standards if this is technical possible.

In some embodiments, the invention also discloses a modification of the standard versions cited above.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter-changeable under appropriate circumstances and that the embodiments of the invention described herein are capable of operation in other sequences than described or illustrated herein.

According to a first aspect of the invention, a method is disclosed for routing a communication in a roaming scenario in a communication system to the responsible core for which the communication is subscribed, wherein the communication system comprises a first core of a home network, a second core of the home network and a third core of a visited network, wherein the subscription was issued by an operator of the first core, but the subscription is assigned to the second core.

The method comprising the following steps:
- Sending a message within the visited network, wherein the message is assigned to a service of the second core, wherein the message has a first destination information pointing to the second core of the home network, wherein the first destination information comprises an identifier of the subscription, in particular a SUPI, and/or a routing indicator RI;
   ∘ the message can comprise SUPI or a SUCI and can be related to certain network function and/or application running on a UE that is associated to a SUPI subscription; message can be received by the base station of the visited network, wherein the visited network evaluates; since the SUPI or a SUCI comprise the MCC and MNC information, the visited network can evaluate the home network of the message; however, because in this case the SUPI subscription is related to the second core, the MCC and MNC information is not sufficient information to route the message directly to this second core because the MCC and MNC only provides the information who is the MNO and will typically need the communication to the first network; the first destination information provide information to distinguish the first core from the second core that can particularly be used by the MNO to provide the correct network address of the second core; the SUCI comprises the SUPI in an encrypted form;
- Receiving the message by a vSEPP of the visited network, whereby routing information for the first target information is stored in the vSEPP, in particular in the form of a table, whereby the vSEPP routes the message to a mSEPP of the second core based on the identifier of the subscription and/or the routing indicator "RI".
   ∘ The routing information for the first target information can be the network address of the network element of the second core, in particular of the mSEPP. It can be provided in the form of a table that states that a message comprising RI, an IMSI and/or a SUPI shall be routed to a network address "xxx" they can be the network address of the mSEPP, the network address can be written according to the IPv4 or IPv6 standard, e.g. 192.0.2.1 in IPv4, and 2001:db8:0:1234:0:567:8:1 in IPv6.

This provides the advantage that the first target information can be used so that already at a very early stage of the communication the message can be routed efficiently to the second core, wherein this information is already used by the visited network, in particular by the vSEPP, and in very early stage of the communication. This avoids beneficially a determination and associated signaling traffic within the first core as it is the case in the state-of-the-art, if the first core detects that the message actually shall be sent to the second core. In addition, latency of the communication is being efficiently reduced. Within the context of the description the responsible core for which the communication is subscribed means that the communication is based on a SIM, SUPI and/or IMSI subscription to a provider. As explained above IMSI and/or SUPI ranges can be leased by a MVNO from a MNO. The communication can be related to a network function, in particular to the network function or an application that is run on a UE, that communicates with an appropriate network function or use a service within the responsible core. In particular, the first core of the home network is being operated by the MNO, the second core of the home network is operated by the MVNO and the third core of the visited network is operated by a further network operator as it is known for the person skilled in the art for the roaming use case.

The routing identifiers within the context of the invention point to a respective core of the network. Typically, the first core of the MNO shows the routing indicator RI=0, whereas the second core of the MVNO is designated as RI=1. However, to make the description more readable, we often simply only write about the routing indicator RI which is meant to be RI=1. The person skilled in the art knows that the exact number of the routing indicator shall not limit the scope of the invention.

In an embodiment, the routing information for the first destination information is exchanged during a communication, in particular during a communication setup, of a network function and/or is exchanged, in particular regularly, between a network operator of the first core and a network operator of the third core.

This provides the advantage of providing different means to provide the routing information to the network operator of the third core that can provide its vSEPP with this routing information, wherein the vSEPP can permanently store this information to use it in further communication. In particular, if the network operator of the third core and the MNO know that the situation that the message sent within the visited network shall be routed to the second core of the home network happens very often, it can make sense to share this information independently of a distinct communication performed for example by an UE. This avoids additional signaling traffic between the MNO and the network operator of third core to exchange the respective information every time a new communication is being set up between the visited network and the second core. However, providing the routing information during the communication or during a communication set up provides the advantage that the routing information is always up to date and can use already established protocols between the SEPPs.

In an embodiment, the message is sent as SUCI, wherein the SUCI comprises the routing indicator RI as the first destination information, wherein the SUCI is routed from the vSEPP to the mSEPP based on the routing indicator RI.

This provides the advantage that the SUCI already comprises the RI that can be used to route the SUCI correctly to the second core and/or to request the routing information of the second core, in particular the mSEPP, that is associated to the RI.

In one embodiment, the message is sent as a SUPI, wherein the SUPI comprises the identifier of the subscription, in particular the IMSI, and/or the routing indicator "RI" as the first target information, wherein the SUPI is routed from the vSEPP to the mSEPP based on the routing indicator RI and/or the identifier of the subscription. A SUPI comprising the routing indicator RI would mean an amendment of the current 3GPP standard as the current SUPI, does not support a routing indicator RI. Typically, before sending a SUPI a tunnel is already being established between the vSEPP and the mSEPP. However, it can happen that the tunnel between the vSEPP and the mSEPP is being terminated, for example due to technical failure, but that the UE that sense the SUPI message is not aware of this technical failure so that it nevertheless sends the SUPI message instead of a SUCI.

However, if the SUPI comprises the routing indicator RI it can be assessed, in particular if no active n32-f communication is being established between the vSEPP and the mSEPP, at a very early stage that the message is associated to the second core. This routing indicator can be put into the well-known FQDN messaging between the vSEPP and the vDNS and then also put into the well-known FQDN messaging between vDNS and the hDNS so that the hDNS can evaluate at a very early stage that the communication shall be routed to the second core and provide this information to the visiting network so that the very first handshake communication already takes place with the mSEPP. In particular, after a terminated n32-f communication, a SUPI without the information of the routing indicator RI would be sent into the first core and network resources would be wasted to terminate that this message is actually associated to the second core (in the case that the vSEPP is not being capable to assess a corresponding routing table that states that a certain SUPI range needs to be routed to the second core). The routing indicator and/or the IMSI can also be used to route the message correctly to the second core if this routing information is already provided to the vSEPP before the message is being sent.

In an embodiment, a first resolving request, in particular as a first FQDN message, comprising the routing indicator "RI" with respect to the routing information for the first destination information is sent from a vDNS of the third core to a hDNS of the first core, wherein a first resolving response is sent from the hDNS to the vDNS, wherein the first resolving response comprises a network address of the second core, in particular of the mSEPP, as routing information. The first resolving request can be sent as a FQDN message type comprising the routing indicator RI. In particular, in the resolving request, the vDNS asks the hDNS for the network address of the mSEPP by using the routing indicator RI information. The first network operator can provide the hDNS with the information that the routing indicator RI points to the second core, in particular to the mSEPP of the second core with a certain network address. Within the context of the invention there are two types of FQDN messages. The first type of FQDN messages, named the first FQDN message, comprises the routing indicator "RI". This kind of FQDN messages is new and needs adaption of current standard protocols. The second type of FQDN messages, named the second FQDN message, does not comprises the routing indicator "RI" and it is the kind of FQDN message currently used in the standard. In principle the location of the routing indicator RI within a FQDN message is variable, but it is beneficial to place it before the .mnc information field.

This provides the advantage that the vDNS is being provided with the network address of the second core, in particular of the mSEPP of the second core. This enables the vDNS to share this information with other network elements of the visited network.

In an embodiment, the vDNS stores the information that for a certain network operator, identified by MCC and/or MNC, the routing indicator RI points to a second core, in particular to a mSEPP of the second core with a distinct network address and provides the information to the vSEPP after receiving the first FQDN message from the vSEPP. In particular, this information can be stored within the vDNS for a predefined period of time and can be provided in the DNS response, wherein this information can be regularly updated. The period of time can be longer and the frequency of the updated protests can be higher if the first network operator and the visiting network operator has a high level of roaming use cases. For example, RI= 0 can point to the first core, wherein RI = 1 can point to the second core. This information be written in a table as follows:

| | | | |
|---|---|---|---|
| MCC | \|MNC | \|RI | \|network address \| |
| 232 | \|003 | \|0 | \|xxxxxxxxxxxxx \| |

In this case, the message can directly be routed to the hSEPP.

| | | | | |
|---|---|---|---|---|
| MCC | \|MNC | \|RI | \|network address | \| |
| 232 | 1003 | \|1 | \|yyyyyyyyyyyy | \| |

In this case, the message can directly be routed to the mSEPP.

This provides the advantage that the vDNS can provide the vSEPP with this information if the vSEPP sends a FQDN resolving message to the vDNS. Hence, this avoids the need to ask the hDNS every time for the appropriate network address of the second core been building up a new communication - in particular if no n32-f communication is being active. This enables the vSEPP to set up a tunnel with the mSEPP.

In an embodiment, the vDNS transmits the routing information to the vSEPP after receiving the first FQDN message from the vSEPP.

In this case, the vSEPP can also be provided with the appropriate information to set up a tunnel with the mSEPP without the need to explicitly store the routing information for further communication setups within the vDNS but only to provide it to the vSEPP for the actual message. This also provides the advantage that this information is always being updated if the vDNS asks the hDNS for the current routing information for every communication set up.

In an embodiment, the vSEPP initiates a first handshake request with the mSEPP, wherein a handshake response of the mSEPP comprises SUPI numbers associated with the second core with the RI, wherein said SUPI numbers are added to the routing information in the vSEPP and are optionally linked to the RI.

This provides the advantage that the vSEPP can build up table that lists which SUPIs are associated to the second core and shell therefore be routed to the second core. So, even if further messages are SUPI messages according to the current standard, that means without a routing indicator, it is nevertheless possible to directly route those SUPI messages to the second core, in particular to the mSEPP. An exemplary routing information based on SUPI could look like this:

| | | |
|---|---|---|
| SUPI | \|network address | \| |
| 232035123456789 | \|yyyyyyyyyyyyyy | \| |

or if SUPI ranges are specified, the table can look as follows

| | | | |
|---|---|---|---|
| SUPI (start) | \| SUPI (end) | \|network address | \| |
| 232035123400000 | 1232035123456789 | \|yyyyyyyyyyyyyy | \| |

In an embodiment, a SUPI comprising the routing indicator "RI" is sent to the vSEPP for communication, in particular after a terminated n32-f connection, wherein the vSEPP asks for a network address of an mSEPP of the first core by sending a first FQDN message comprising the routing indicator "RI" to the vDNS.

In principle, those advantages have already been described above in the context of the SUPI. The SUPI comprising the routing indicator "RI" would need an adaption of the current 3GPP standard that does not foresee that the SUPI comprises the routing indicator. However, as explained above, this leads to the effect that the SUPI can be routed as fast as the SUCI to the second core and that the vSEPP can be provided as fast as in the SUCI case with the appropriate routing information.

However, if the n32-f connection is being terminated and the SUPI does not comprise the routing indicator RI, a workaround is needed to route the SUPI to the second core. This workaround has the advantage that the SUPI can nevertheless be routed to the second core while having the downside of using additional network resources. This workaround can work as follows:
In this workaround embodiment, the SUPI without the routing indicator "RI" is sent to the vSEPP for communication, in particular after an interrupted n32-f connection, wherein the vSEPP requests a network address of the hSEPP by the vSEPP sending an FQDN message without RI to the vDNS, wherein the vDNS sends a second resolving request to the hDNS, wherein the hDNS transmits a network address of the hSEPP, in particular as a second FQDN message, as a second resolving response, wherein the vSEPP starts a second handshake request with the hSEPP, wherein the first core, in particular an AMF of the first core, determines that the SUPI is assigned to the second core, whereupon the hSEPP sends a second handshake response to the vSEPP, in particular as a 307 Temporary redirect, wherein the second handshake response comprises information that the SUPI is assigned to the second core with the routing indicator "RI", in particular as the FQDN message type, wherein the vSEPP forwards the information of the second handshake response to the vDNS.

According to a second aspect of the invention a SUPI data type is disclosed, wherein the SUPI data type comprises a routing indicator RI. In principle, the location of the routing indicator RI within the SUPI data type is variable.

Most likely, such an inventive SUPI data type would mean an amendment of the current 3GPPT standard so that the network elements and/or the network functions, in particular in the 5G environment, can process this new SUPI data type.

This new SUPI data type has the benefit of the solving long existing problem that the routing of a SUPI coming use cases, in particular to an MVNO, is not efficient. It is surprising that the routing indicator is known per se because it is already within the SUCI but that it has not been used up to the current invention to improve the efficiency of routing in roaming situations.

According to a third aspect of the invention, a FQDN data type is disclosed, wherein the FQDN data type comprises a routing indicator RI.

This provides the effect that it is possible to ask efficiently for the network address of a SEPP of the MVNO. It is surprising that the routing indicator is known per se because it is already within the SUCI but that it has not been used up to the current invention to improve the efficiency of routing in roaming situations by incorporating into the FQDN messaging.

According to a fourth aspect of the invention, a SEPP is disclosed that is configured to process the SUPI data type with the routing indicator RI and/or a SUCI comprising a routing indicator RI, wherein the SEPP is configured to extract the routing indicator and do create the FQDN data with the routing indicator RI.

In an embodiment, the SEPP is configured to create a handshake response that provides routing information for a SUPI data type and/or for a SUCI comprising a routing indicator RI.

According to a fifth aspect of the invention, a communication system is disclosed that is configured to execute the steps of the method described above.

In the following, preferred implementation examples of the present invention are explained with reference to the accompanying figure:
- Fig. 1:: shows a first flow chart of the inventive method;
- Fig. 2:: shows a second flow chart of the inventive method;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below or technically not possible.

Furthermore, the terms first, second, third and the like in the description and in the claims are used for distinguishing between similar elements and not necessarily for describing a sequential or chronological order. It is to be understood that the terms so used are inter-changeable under appropriate circumstances and that the embodiments of the invention described herein are capable of operation in other sequences than described or illustrated herein.

At first some terms, which already known for the person skilled in the art because he knows the standard, that are used in the context of the invention are explained:
FQDN stands for Fully Qualified Domain Name. In the context of communication, especially in networking and internet-related scenarios, an FQDN plays a crucial role in identifying and addressing resources. An FQDN is a complete domain name that specifies the exact location of a resource in the domain hierarchy of the Domain Name System (DNS). It includes the host name and the domain name, including all levels of the domain hierarchy from the top-level domain (TLD) to the root domain. Using FQDNs in communication is beneficial because it provides a standardized way to identify and locate resources on the internet or within a network. It helps ensure that data is sent to the correct destination, and it simplifies the management of network resources by allowing for easy and human-readable naming conventions. FQDNs are beneficial for routing data over the internet. They help direct requests to the appropriate servers by providing a unique identifier for each host.

The SUCI is an identifier used in the 5G system to represent a user while concealing the subscription permanent identifier (SUPI) for privacy reasons. the SUCI is a key component in 5G networks for user identification, and is constructed in a way that preserves user privacy by concealing the subscription permanent identifier. The construction involves encryption, integrity protection, and various components such as the Home Network Public Key, PMN Identifier, AMF, and parts of the Subscription Permanent Identifier.

The SUCI can be build up as follows:
1. Home Network Public Key: The Home Network Public Key is associated with the home network and is used in the process of generating the SUCI.
2. PMN Identifier (PMN-ID): The PMN Identifier represents the Public Land Mobile Network and is part of the SUCI. It identifies the serving PMN (Public Land Mobile Network) to which the user is attached.
3. AMF (Authentication Management Field): The AMF is a field in the SUCI that is used for managing authentication-related information.
4. SUPI Part: The Subscription Permanent Identifier (SUPI) is divided into two parts: i) Home Network Part (HN-PART): This part is encrypted using the Home Network Public Key. ii) AMF Part: This part is used for integrity protection.
5. Protection Scheme: The SUCI is designed to be protected using a protection scheme that involves encryption and integrity protection. This ensures the confidentiality and integrity of the SUCI during transmission and storage.

The SUPI can be designed to be the IMSI and comprise the MCC, MNC and the MSIN (mobile subscriber identification number).

Fundamental concept and scenarios the context of the invention:
To distinguish between different clusters of SIM cards without knowing the whole IMSI the Routing Indicator RI, which is part of the SUCI could be used.

A reduction of the back-and-forth communication with the original hPMN could be realized by adding the Routing Indicator to the FQDN in a way like "ri<RI>.5gc.mnc<MNC>.mcc<MCC>.3gppnetwork.org" or as "5gc-ri<RI>.mnc<MNC>.mcc<MCC>.3gppnetwork.org". The hPMN DNS can than either directly point to the MVNO mSEPP or to the MVNO mDNS to gather further details.

If not technically necessary, the steps of the methods disclosed can be executed in another order. However, in a special embodiment, the steps of the method are being executed in the order described below.

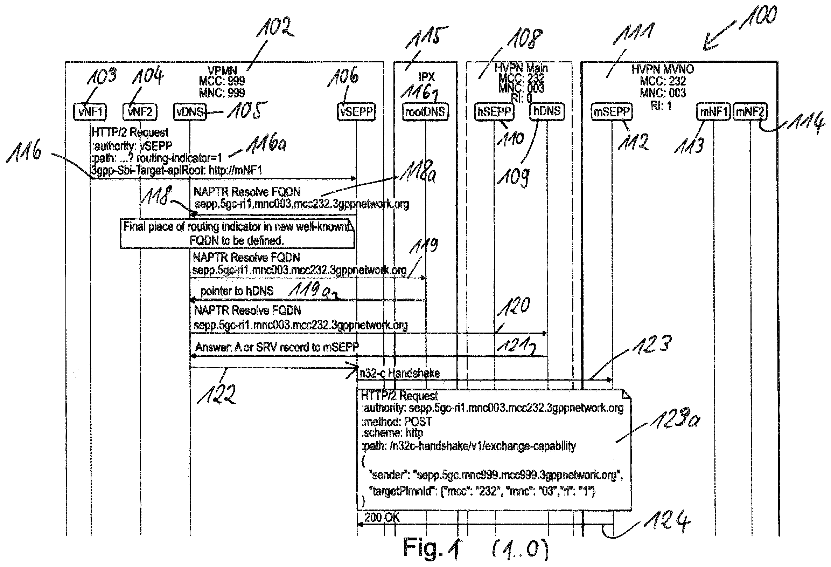

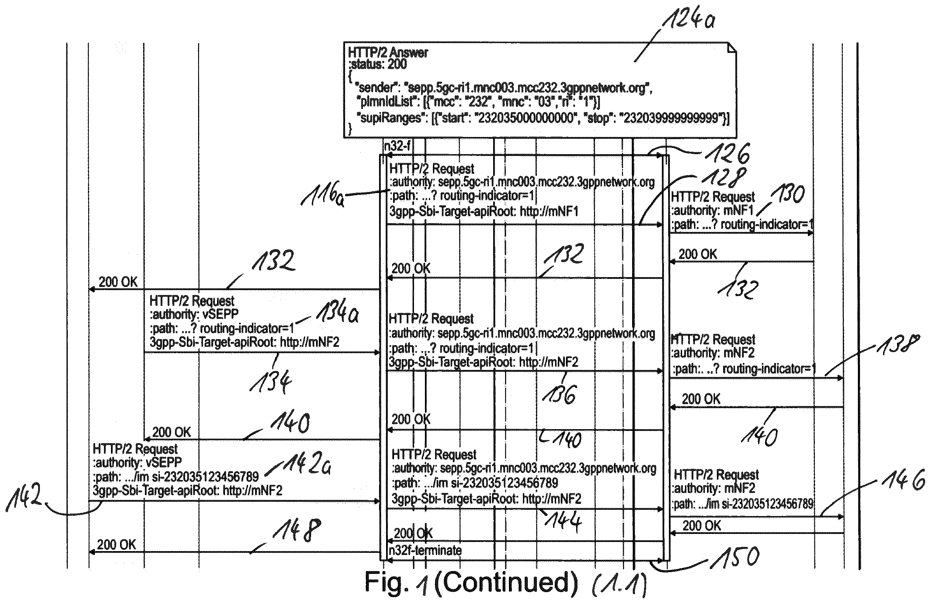

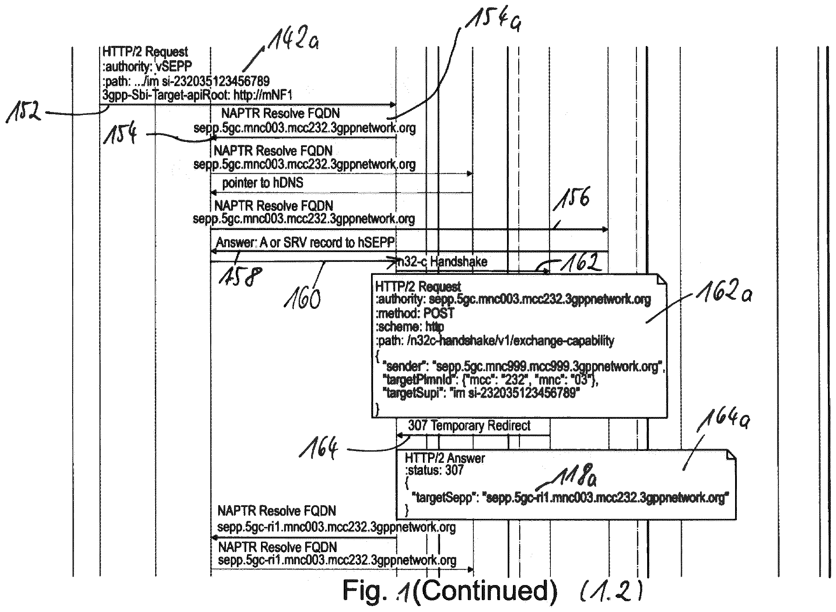

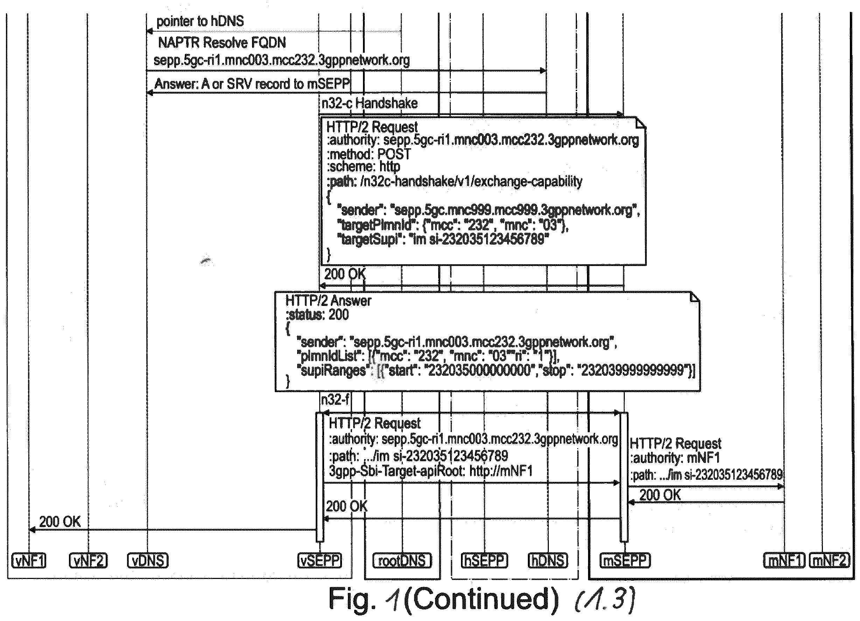

Fig. 1 shows a first flow chart of the inventive method.

Fig. 1 shows a communication system 100, in particular a 3GPP communication system according to the current standard of the application date of the invention.

The communication system 100 can comprise:
- a visited network 102 that can comprise
   ∘ a first network function vNF1 103, a second network function vNF2 104, a domain name server vDNS 105 and a Security Edge Protection Proxy (SEPP) vSEPP 106;
- a home network 108 of a MNO with the first core that can comprise
   ∘ a domain name server hDNS 109 and a Security Edge Protection Proxy (SEPP) hSEPP 110;
- a home network 111 of a MVNO with a second core that can comprise
   ∘ a Security Edge Protection Proxy (SEPP) mSEPP 112, a first network function mNF1 113, a second network function mNF2 114; and/or
- optionally an IPX network 115 that comprises a rootDNS 116;

In the following, the home network 111 of the MVNO with the second core will also be described as being the MVNO-network 111 to make the description more readable.

In the use case of the invention, the MNO has leased at least one SUPI, typically a whole SUPI range, to the MVNO. Hence, if the user with this leased SUPI wants to communicate with his UE within the visited network 102 by using a certain network function, a communication connection to the MVNO-network 111. In that sense the UE can start the appropriate network function or a certain application that makes use of a certain network function.

In the following, a routing indicator RI = 0 points to the home network 108, wherein a routing indicator RI = 1 points to the MVNO-network 111.

We deal with the routing use case so that the UE is within the network 102:
In step 116: the network function vNF1 103 is started, in particular by the UE, by sending a SUCI 116a message to the vSEPP 106, wherein the SUCI 116a message comprises the routing indicator RI=1.

In step 118: the vSEPP 106 sends a first FQDN message 118a comprising the routing indicator RI = 1 to the vDNS 105 in order to obtain the network address of the home network 108 by providing the MNC 003 and MCC 232. The home network 108 can be determined using the MNC and/or MCC information. To our knowledge this is the first time that the first FQDN message 118a comprises the routing indicator RI = 1. The first FQDN message 118a takes the routing indicator RI = 1 over from the SUCI 116a as well as the MCC and the MNC. This has the benefit that this information can be used afterwards as shown below. In principle the location of the routing indicator RI within a FQDN message is variable, but it is beneficial to place it before the .mnc information field.

In Optional step 119: the vDNS 105 can ask the rootDNS 116 for the network address of the hDNS 109 and receive an appropriate answer 119a.

In step 120: the vDNS 105 sends the first FQDN message 118a comprising the routing indicator RI = 1 to the hDNS 109 to obtain the routing information for the message 116a. Due to the routing indicator RI = 1, the hDNS 109 determines that the message 116a shall be routed to the MVNO-network 111 it is also possible the hDNS 109 arranges with the MVNO to give the right answer or to point to the mDNS;

in step 121: the hDNS 109 sends as an answer the routing information back to the vDNS 105.

In step 122: the vDNS 105 provides the vSEPP 106 with this routing information.

As a consequence, in step 123: the vSEPP 106 is able, based on the obtained routing information, to directly establish a n32-handshake communication with the mSEPP 112 of the MVNO-network 111; the text box 123a of Fig. 1 shows some exemplary information that can be exchanged between the vSEPP 106 and the mSEPP 112 during the handshake communication. This information can comprise the routing indicator RI=1 and/or the SUCI 116a. The mSEPP 112 can evaluate which SUPIs or SUPI ranges are associated to the MVNO-network 111 having the RI=1. The n32-handshake enables to set up a tunnel between the vSEPP 106 and the mSEPP 112.

In step 124: the mSEPP 112 send a "200 ok" message 124a to the vSEPP 106 to acknowledge a successful handshake procedure and can return within the "200 ok" message 124a the information which SUPI or SUPI ranges are associated to routing indicator RI=1 and therefore to the MVNO-network 111 along with the routing information, e.g. the network address of the mSEPP 112. The vSEPP 106 can set up a table that determines the routing information for a SUPI and/or the routing indicator RI = 1.

This table can look as follows:

| | | | |
|---|---|---|---|
| SUPI ranges | \|RI | \| network address | \| |
| 232035000000000 to 23203999999999 | 1 | \| yyyyyyyyyyyyyy\| | |

Wherein yyyyyyyyyyyyyy can be the network address of the mSEPP 112; of course, this table and the further tables shown can also comprise MCC and/or MNC information, so that every table can be associated to a certain MNO;

Hence, an algorithm can be implemented within the vSEPP 106 that uses the information of the table as follows: if a SUPI is within this range or if the RI = 1, then the communication is to be routed to the mSEPP 112.

As an advantage, the vSEPP 106 is very efficiently provided with the routing information RI at a very early stage so that internal signaling within the home network 108 is being avoided and latency is being reduced.

Hence, it is possible that already in step 126, the vSEPP 106 sets up a n32-f communication with the mSEPP 112 to route the message 116a in step 128 first to the mSEPP 112, wherein the mSEPP 112 then routes the message 116a in step 130 the corresponding first network function mNF1 113 of the MVNO-network 111 to provide a service.

After the mNF1 113 has received the message 116a, a "200 ok" message can be sent in step 132 from the mNF1 113 to the first network function vNF1 103 to acknowledge successful communication establishment. In the following the service related to the network function can be run.

In the case of an active n32-f communication between the vSEPP 106 and the mSEPP 112, the vSEPP 106 is able to use the information provided by the message 124a, in particular in the form of the exemplary table shown above, to route further communication correctly if this further communication provides the corresponding RI and/or SUPI information.

This is illustrated in step 134, in which the second network function vNF2 104 sends a SUCI message 134a comprising the routing indicator RI = 1 to the vSEPP 106.

In step 136, the vSEPP 106 uses the routing information of the table shown above and routes the message 134a directly to the mSEPP 112 without further signaling traffic.

In step 138, the mSEPP 112 routes the message 134a to the corresponding second network function mNF2 114 of the MVNO-network 111.

After the mNF2 114 has received the message 134a, a "200 ok" message can be sent in step 140 from the mNF2 114 to the second network function vNF2 104 to acknowledge successful communication establishment. In the following the service related to the network function can be run.

By using this table, it is also possible to route SUPI messages according to the current standard (which means that the SUPI does that comprise a routing indicator) very efficiently to the MVNO-network 111.

In step 142, a SUPI message 142a without routing indicator RI information is sent from the vNF1 103 to the vSEPP 106.

In step 144, based on the routing information, in particular the table, stored within the vSEPP 106, in combination with the SUPI number of the SUPI message 142a, the vSEPP 106 can directly route the SUPI message 142a to the mSEPP 112.

In step 146, the mSEPP 112 routes the SUPI message 142a to the appropriate network function mNF1 113 or mNF2 114;

After the mNF1 113 or the mNF2 114 has received the message 142a, a "200 ok" message can be sent in step 148 from the mNF1 113 or the mNF2 114 to the second network function vNF1 103 to acknowledge successful communication establishment. In the following the service related to the network function can be run.

Due to various reasons, for example due to technical problems, it can happen that the n32-f communication between the vSEPP 106 and the mSEPP 112 is terminated as shown in step 150. In current implementation this has the consequence that the routing information that was provided to the vSEPP 106 gets lost. It can happen that the UE is not being aware of the terminated n32-f communication, so that it nevertheless sends a SUPI containing message according to the current standard that does not comprise a RI. In this case, that is illustrated next, a workaround solution is being necessary in order to provide the vSEPP 106 again with the appropriate routing information.

In step 152, a SUPI message 142a without routing indicator RI information is sent from the vNF1 103 to the vSEPP 106. As explained above, because the vSEPP 106 has lost the routing information it cannot directly route the SUPI message 142a based on the SUPI number to the second core.

Hence, in step 154 the vSEPP 106 requests a network address of the hSEPP 110, wherein the vSEPP 106 sends a second FQDN 145a message without the RI to the vDNS 105.

In step 156, the vDNS 105 sends a second resolving request as the second FQDN 145a to the hDNS 109.

In step 158, the hDNS 109 transmits a network address of the hSEPP 110 as a second resolving response to the vDNS 105.

In step 160, the vDNS 105 provides this information to the vSEPP 106.

In step 162, the vSEPP 106 starts a handshake request with the hSEPP 110, the handshake request can comprise the information shown in the text box 162a. At least, the handshake request comprises the information about the SUPI number of the SUPI message 142a. Based on this SUPI number, the first core determines, for example by using a AMF function of the first core, that the SUPI is assigned to the second core.

In step 164, the hSEPP 110 sends a second handshake response to the vSEPP, in particular as a 307 Temporary redirect, wherein the second handshake response comprises information that the SUPI is assigned to the second core with the routing indicator RI = 1. The textbox 164a shows a possible embodiment of the information provided by the 307 Temporary redirect. It is shown that the handshake response can comprise the first FQDN type 118a comprising the routing indicator RI=1.

The steps in the following step 164 equal the steps 118 to 132 with the only difference that the original message is the SUPI without the routing indicator RI instead of the SUCI. To avoid unnecessary reputations, it is therefore referred to the steps 118 to 132 as the teaching how to finish the procedure.

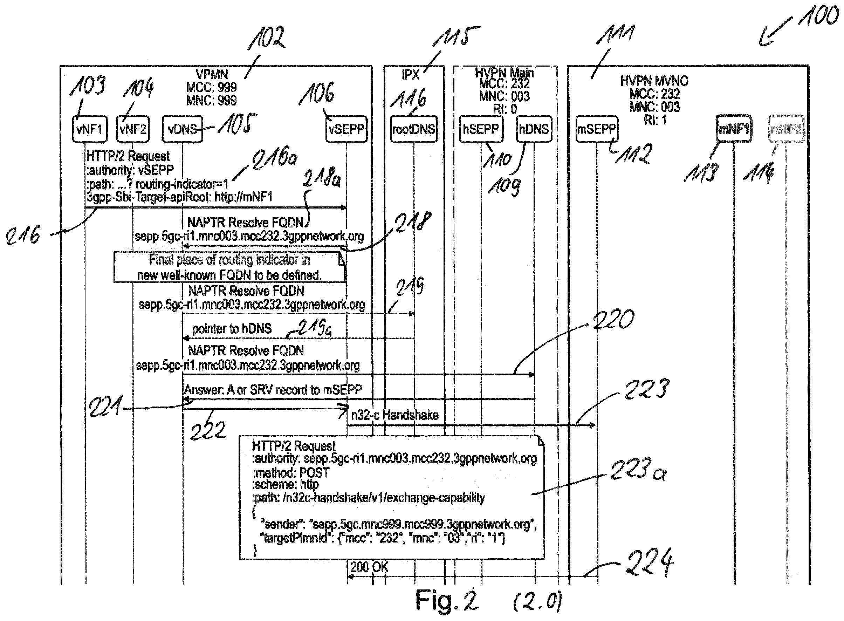

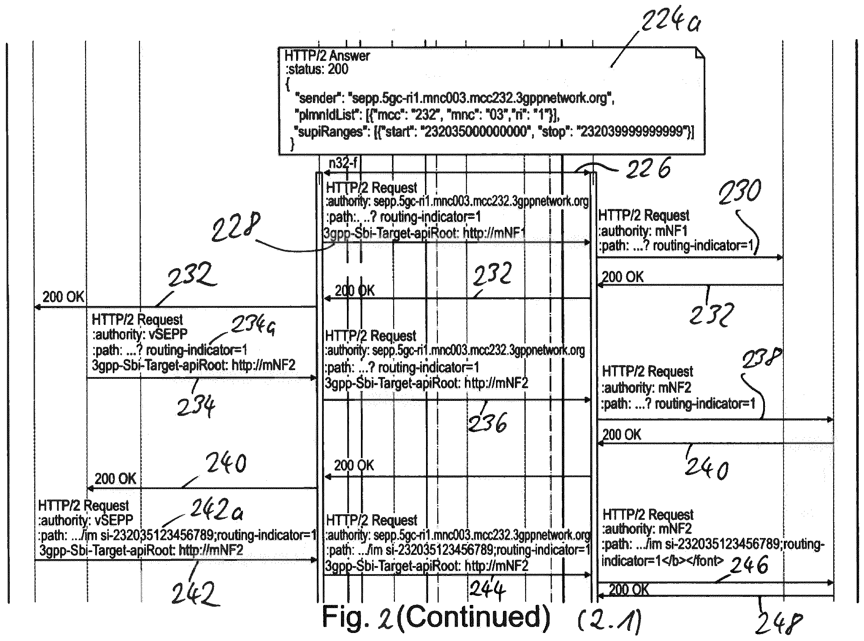

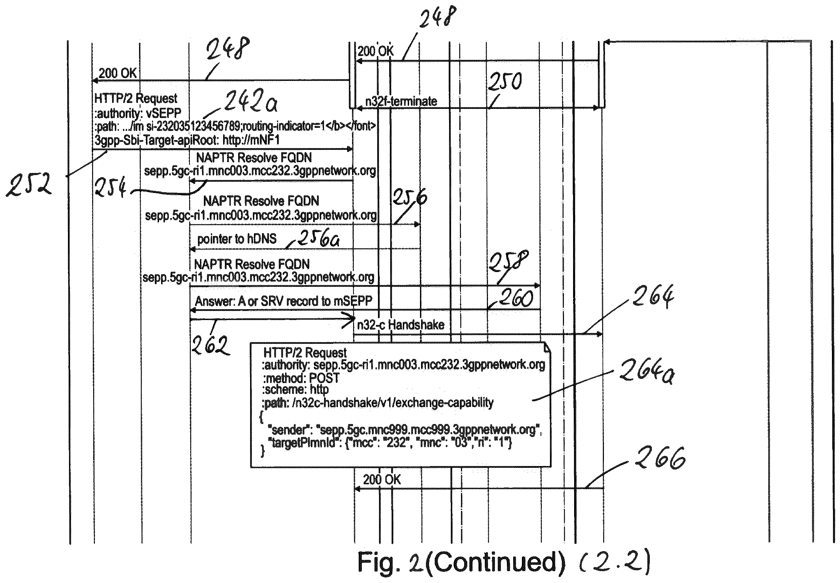

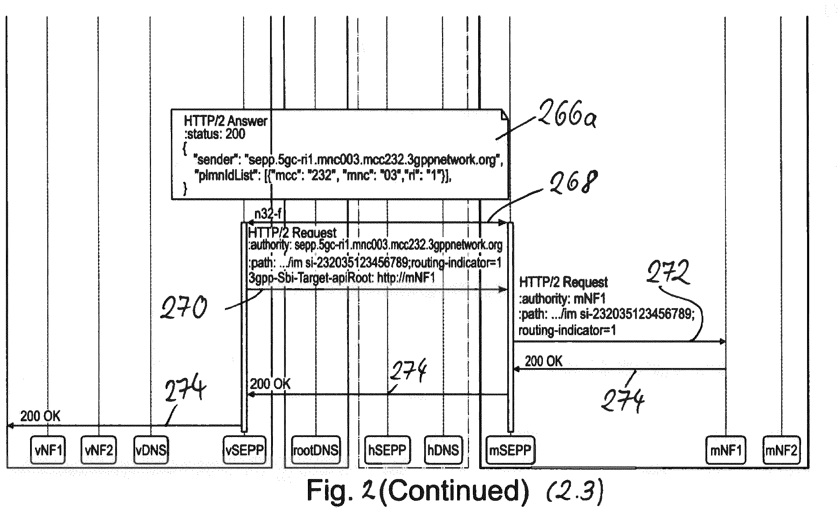

Fig. 2 shows a second flow chart of the inventive method.

The main difference between Fig. 1 and Fig. 2 is that Fig. 2 introduces the usage of a SUPI comprising the routing indicator RI. This would result in an adaption of the SUPI as it is used in accordance with the current standard. It should be shown that nevertheless such a SUPI comprising the routing indicator RI is very efficient in routing the message correctly to the second core as it reduces to large amount the signaling traffic of the workaround shown in Fig. 1 after a terminated n32-f connection.

As it was already the case in Fig. 1, Fig. 2 also starts by sending a SUCI comprising the routing indicator RI = 1;

In step 216: the network function vNF1 103 is started, in particular by the UE, by sending a SUCI 216a message to the vSEPP 106, wherein the SUCI 216a message comprises the routing indicator RI=1.

In step 218: the vSEPP 106 sends a first FQDN message 218a comprising the routing indicator RI = 1 to the vDNS 105 in order to obtain the network address of the home network 108 by providing the MNC 003 and MCC 232. The home network 108 can be determined using the MNC and/or MCC information. To our knowledge this is the first time that the first FQDN message 218a comprises the routing indicator RI = 1. The first FQDN message 218a takes the routing indicator RI = 1 over from the SUCI 216a. This has the benefit that this information can be used afterwards as shown below. In principle the location of the routing indicator RI within a FQDN message is variable, but it is beneficial to place it before the .mnc information field.

In Optional step 219: the vDNS 105 can ask the rootDNS 116 for the network address of the hDNS 109 and receive an appropriate answer 219a.

In step 220: the vDNS 105 sends the first FQDN message 218a comprising the routing indicator RI = 1 to the hDNS 109 to obtain the routing information for the message 216a. Due to the routing indicator RI = 1, the hDNS 109 determines that the message 216ashall be routed to the MVNO-network 111.

In step 221: the hDNS 109 sends as an answer the routing information back to the vDNS 105.

In step 222: the vDNS 105 provides the vSEPP 106 with this routing information.

As a consequence, in step 223: the vSEPP 106 is able, based on the obtained routing information, to directly establish a n32-handshake communication with the mSEPP 112 of the MVNO-network 111; the text box 223a of Fig. 1 shows some exemplary information that can be exchanged between the vSEPP 106 and the mSEPP 112 during the handshake communication. This information can comprise the routing indicator RI=1 and/or the SUCI 216a. In contrast to Fig. 1, the mSEPP 112 needs not to evaluate which SUPIs or SUPI ranges are associated to the MVNO-network 111 having the RI=1 because the RI=1 information is already sufficient. But of course, the mSEPP 112 or other parts of the fist core can nevertheless perform this evaluation. The n32-handshake enables to set up a tunnel between the vSEPP 106 and the mSEPP 112.

In step 224: the mSEPP 112 send a "200 ok" message 124a to the vSEPP 106 to acknowledge a successful handshake procedure and can return within the "200 ok" message 224a the information which SUPI or SUPI ranges are associated to routing indicator RI=1 and therefore to the MVNO-network 111 along with the routing information, e.g. the network address of the mSEPP 112. However, in principle it is sufficient that only the information is provided to which network address a message comprising the routing indicator RI =1 shall be routed. The vSEPP 106 can set up a table that determines the routing information for a SUPI and/or a SUCI having the routing indicator RI = 1.

This "reduced" table of Fig. 2 can look as follows:

| | | |
|---|---|---|
| \|RI | \| network address | \| |
| \|1 | \| yyyyyyyyyyyyyy\| | |

Wherein yyyyyyyyyyyyyy can be the network address of the mSEPP 112;

Hence, an algorithm can be implemented within the vSEPP 106 that uses the information of the table as follows: if a message comprises RI = 1, then the communication is to be routed to the mSEPP 112.

As an advantage, the vSEPP 106 is very efficiently provided with the routing information RI at a very early stage so that internal signaling within the home network 108 is being avoided and latency is being reduced.

Hence, it is possible that already in step 226, the vSEPP 106 sets up a n32-f communication with the mSEPP 112 to route the message 216a in step 228 first to the mSEPP 112, wherein the mSEPP 112 then routes the message 216a in step 230 the corresponding first network function mNF1 113 of the MVNO-network 111 to provide a service.

After the mNF1 113 has received the message 216a, a "200 ok" message can be sent in step 232 from the mNF1 113 to the first network function vNF1 103 to acknowledge successful communication establishment. In the following the service related to the network function can be run.

In the case of an active n32-f communication between the vSEPP 106 and the mSEPP 112, the vSEPP 106 is able to use the information provided by the message 224a, in particular in the form of the exemplary reduced table shown above, to route further communication correctly if this further communication provides the corresponding RI information.

This is illustrated in step 234, in which the second network function vNF2 104 sends a SUCI message 234a comprising the routing indicator RI = 1 to the vSEPP 106.

In step 236, the vSEPP 106 uses the routing information of the table shown above and routes the message 234a directly to the mSEPP 112 without further signaling traffic.

In step 238, the mSEPP 112 routes the message 234a to the corresponding second network function mNF2 114 of the MVNO-network 111.

After the mNF2 114 has received the message 234a, a "200 ok" message can be sent in step 140 from the mNF2 114 to the second network function vNF2 104 to acknowledge successful communication establishment. In the following the service related to the network function can be run.

By using this table, it is also possible to route SUPI comprising RI= 1 very efficiently to the MVNO-network 111.

In step 242, a SUPI message 242a with routing indicator RI =1 information is sent from the vNF1 103 to the vSEPP 106.

In step 244, based on the routing information, in particular the reduced table, stored within the vSEPP 106, in combination with the RI=1 information of the SUPI, the vSEPP 106 can directly route the SUPI message 242a to the mSEPP 112.

In step 246, the mSEPP 112 routes the SUPI message 242a to the appropriate network function mNF1 113 or mNF2 114;

After the mNF1 113 or the mNF2 114 has received the message 242a, a "200 ok" message can be sent in step 248 from the mNF1 113 or the mNF2 114 to the second network function vNF1 103 to acknowledge successful communication establishment. In the following the service related to the network function can be run.

Due to various reasons, for example due to technical problems, it can happen that the n32-f communication between the vSEPP 106 and the mSEPP 112 is terminated as shown in step 250. In current implementations this has the consequence that the routing information that was provided to the vSEPP 106 gets lost, whereas it is in principle possible to store this information even if the n32-f communication gets terminated. It can happen that the UE is not being aware of the terminated n32-f communication, so that it nevertheless sends a SUPI message. As it was shown in Fig. 1: a SUPI without the RI = 1 information introduces additional signaling so that the workaround is being needed. To make this more efficient it is the proposal to use the SUPI that comprises the routing indicator RI = 1, which leads to the following more efficient procedure:

In step 252, the SUPI message 242a with the routing indicator RI information is sent from the vNF1 103 to the vSEPP 106.

In step 254: the vSEPP 106 sends the first FQDN message 218a comprising the routing indicator RI = 1 of the SUPI message 242a to the vDNS 105 in order to obtain the network address of the home network 108 by providing the MNC 003 and MCC 232. The home network 108 can be determined using the MNC and/or MCC information. The first FQDN message 218a takes over the routing indicator RI = 1 from the SUPI message 242a. This has the benefit that this information can be used afterwards as shown below. In principle the location of the routing indicator RI within a FQDN message is variable, but it is beneficial to place it before the .mnc information field.

In Optional step 256: the vDNS 105 can ask the rootDNS 116 for the network address of the hDNS 109 and receive an appropriate answer 256a.

In step 258: the vDNS 105 sends the first FQDN message 218a comprising the routing indicator RI = 1 to the hDNS 109 to obtain the routing information for the SUPI message 242a. Due to the routing indicator RI = 1, the hDNS 109 determines that the SUPI message 242a shall be routed to the MVNO-network 111.

In step 260: the hDNS 109 sends as an answer the routing information back to the vDNS 105.

In step 262: the vDNS 105 provides the vSEPP 106 with this routing information.

As a consequence, in step 264: the vSEPP 106 is able, based on the obtained routing information, to directly establish a n32-handshake communication with the mSEPP 112 of the MVNO-network 111; the text box 264a of Fig. 1 shows some exemplary information that can be exchanged between the vSEPP 106 and the mSEPP 112 during the handshake communication. This information can comprise the routing indicator RI=1 and/or the SUPI message 242a. In contrast to Fig. 1, the mSEPP 112 needs not to evaluate which SUPIs or SUPI ranges are associated to the MVNO-network 111 having the RI=1, because the RI=1 information is already sufficient. But of course, the mSEPP 112 or other parts of the fist core can nevertheless perform this evaluation. The n32-c handshake enables to set up a tunnel between the vSEPP 106 and the mSEPP 112.

In step 266: the mSEPP 112 send a "200 ok" message 266a to the vSEPP 106 to acknowledge a successful handshake procedure and can return within the "200 ok" message 266a the routing information for the routing indicator RI=1 and therefore "way" to the MVNO-network 111, e.g. by providing the network address of the mSEPP 112. It is sufficient that only the information is provided to which network address a message comprising the routing indicator RI =1 shall be routed. The vSEPP 106 can set up a table that determines the routing information for a SUPI and/or SUCI having the routing indicator RI = 1.

This "reduced" table of Fig. 2 can look as follows:

| | | | | | |
|---|---|---|---|---|---|
| \|RI | \| | MCC\| | MNC | \|network address | \| |
| \|1 | \| | 2621 | 01 | \| yyyyyyyyyyyyyy\| | |

Wherein yyyyyyyyyyyyyy can be the network address of the mSEPP 112;

Hence, an algorithm can be implemented within the vSEPP 106 that uses the information of the table as follows: if a message comprises RI = 1, then the communication is to be routed to the mSEPP 112.

As an advantage, the vSEPP 106 is very efficiently provided with the routing information RI at a very early stage so that internal signaling within the home network 108 is being avoided and latency is being reduced.

Hence, it is possible that already in step 268, the vSEPP 106 sets up a n32-f communication with the mSEPP 112 to route the SUPI message 242a in step 270 first to the mSEPP 112, wherein the mSEPP 112 then routes the message 242a in step 272 the corresponding first network function mNF1 113 of the MVNO-network 111 to provide a service.

After the mNF1 113 has received the message 242a, a "200 ok" message can be sent in step 274 from the mNF1 113 to the first network function vNF1 103 to acknowledge successful communication establishment. In the following the service related to the network function can be run.

## Claims

1. A method for routing a communication in a roaming scenario in a communication system (100) to the responsible core for which the communication is subscribed, wherein the communication system (100) comprises a first core of a home network (108), a second core of the home network and a third core of a visited network (102), wherein the subscription was issued by an operator of the first core, but the subscription is assigned to the second core, the method comprising the following steps:
• Sending a message (116a, 134a, 142a, 242a) within the visited network (102), wherein the message (116a, 134a, 142a, 242a) is assigned to a service of the second core, wherein the message (116a, 134a, 142a, 242a) has a first destination information pointing to the second core of the home network, wherein the first destination information comprises an identifier of the subscription, in particular a SUPI, and/or a routing indicator RI;
• Receiving the message (116a, 134a, 142a, 242a) by a vSEPP (106) of the visited network (102), whereby routing information for the first target information is stored in the vSEPP (106), in particular in the form of a table, whereby the vSEPP (106) routes the message (116a, 134a, 142a, 242a) to a mSEPP (112) of the second core based on the identifier of the subscription and/or the routing indicator RI.

2. The method of claim 1, wherein the routing information for the first destination information is exchanged during a communication, in particular during a communication setup, of a network function (103, 104) and/or is exchanged, in particular regularly, between a network operator of the first core and a network operator of the third core.

3. The method of any of the preceding claims, wherein the message (116a, 134a, 142a, 242a) is sent as SUCI, wherein the SUCI comprises the routing indicator "RI" as the first destination information, wherein the SUCI is routed from the vSEPP (106) to the mSEPP (112) based on the routing indicator RI.

4. The method of any of the preceding claims, wherein the SUPI comprises the identifier of the subscription, in particular the IMSI, and/or the routing indicator "RI" as first target information, wherein the SUPI is routed from the vSEPP (106) to the mSEPP (112) based on the routing indicator RI and/or the identifier of the subscription.

5. The method of any of the preceding claims, wherein a first resolving request, in particular as a first FQDN message (118a), comprising the routing indicator "RI" with respect to the routing information for the first destination information is sent from a vDNS (105) to a hDNS (109), wherein a first resolving response is sent from the hDNS (109) to the vDNS (105), wherein the resolving response comprises a network address of the second core, in particular of the mSEPP, as routing information,

6. The method of claim 5, wherein the vDNS stores the information that for a certain network operator, identified by a MCC and/or a MNC, the routing indicator RI points to the mSEPP of the second core with a distinct network address and provides this information to the vSEPP after receiving a first FQDN message from the vSEPP.

7. The method of claim 5, wherein the vDNS transmits the routing information to the vSEPP after receiving the first FQDN message from the vSEPP.

8. The method of any of the claims, wherein the vSEPP initiates a first handshake request with the mSEPP, wherein a handshake response of the mSEPP comprises SUPI numbers associated with the second core with the RI, wherein said SUPI numbers are added to the routing information in the vSEPP.

9. The method of claim 5, wherein a SUCI comprising the routing indicator "RI" is sent to the vSEPP for initialization, wherein the vSEPP asks for a network address of a mSEPP of the first core by sending a first FQDN message comprising the routing indicator "RI" to the vDNS.

10. The method according to claim 5, wherein a SUPI comprising the routing indicator "RI" is sent to the vSEPP for communication, in particular after a terminated n32-f connection, wherein the vSEPP asks for a network address of a mSEPP of the first core by sending a first FQDN message comprising the routing indicator "RI" to the vDNS.

11. Method according to claim 5, wherein a SUPI without the routing indicator "RI" is sent to the vSEPP for communication, in particular after an interrupted n32-f connection, wherein the vSEPP requests a network address of the hSEPP by the vSEPP sending a second FQDN message (154a) without RI to the vDNS, wherein the vDNS sends a second resolving request to the hDNS, wherein the hDNS transmits a network address of the hSEPP as a second resolving response to the vDNS, wherein the vDNS provides this information to the vSEPP, wherein the vSEPP starts a second handshake request with the hSEPP, wherein the first core determines that the SUPI is assigned to the second core, whereupon the hSEPP sends a second handshake response to the vSEPP, in particular as a 307 Temporary redirect, wherein the second handshake response comprises information that the SUPI is assigned to the second core with the routing indicator "RI", wherein the vSEPP forwards the information of the second handshake response to the vDNS.

12. A SUPI data type, **characterized in that** the SUPI data type comprises a routing indicator RI.

13. A FQDN data type, **characterized in that** the FQDN data type comprises a routing indicator RI.

14. A SEPP configured to process the SUPI data type of claim 12 and/or a SUCI comprising a routing indicator RI, wherein the SEPP is configured to extract the routing indicator and do create the FQDN data type of claim 13.

15. The SEPP of claim 14, wherein the SEPP is configured to create a handshake response that provides routing information for a SUPI data type and/or for a SUCI comprising a routing indicator RI.

16. A communication system configured to execute the method of any of the claims 1-11.
